# EUROPEAN PATENT APPLICATION

(11) **EP 2 779 526 A1**
(43) Date of publication of application: **17.09.2014**
(21) Application number: 14167711.2
(22) Date of filing: 23.02.2010
(51) Int. Cl.: H04L 9/32, H04L 9/10, H04N 5/91, H04N 5/92, G06F 21/64, H04L 29/06, H04N 5/765, H04N 9/79, H04N 5/913, H04N 5/781, G06F 21/72, H04N 5/77, H04N 5/907, H04N 7/18

(54) **Electronic signature device and electronic signature method**

(62) Divisional of application: 10846489.2
(71) Applicant: FUJITSU LIMITED, Kawasaki-shi, Kanagawa 211-8588 (JP); Fujitsu Advanced Engineering Limited, Tokyo 163-1017 (JP)
(72) Inventor: Matsuo, Fumitsugu, Shinjuku-ku, Tokyo 163-1017 (JP); Harano, Yousuke, Shinjuku-ku, Tokyo 163-1017 (JP); Takenaka, Masahiko, Kawasaki-shi, Kanagawa 211-8588 (JP); Yoshioka, Takashi, Kawasaki-shi, Kanagawa 211-8588 (JP); Chiba, Fumiaki, Kawasaki-shi, Kanagawa 211-8588 (JP)
(74) Representative: Schultes, Stephan

(57) **Abstract**

An electronic signature device (100), comprising: a processor (102, 131, 702, 703, 704) configured to: detect temporal changes in a data volume of a time series digital data string related to video or sound outside the device, and internally execute, based on a result of detection of the temporal changes, a signature generation process of generating an electronic signature for the digital data string; and an output unit (110, 705) configured to output the digital data string and the generated electronic signature.

## Description

### TECHNICAL FIELD

The embodiments discussed herein are related to an electronic signature device and an electronic signature method that perform authentication of video or audio related digital data.

### BACKGROUND ART

Conventional devices that record video from cameras and sound have transitioned from analog devices such as video tape recorders to digital recording devices and media such as hard disk drive (HDD) recorders, universal serial bus (USB) memory, and secure digital (SD) memory cards.

Further, video data and audio data digitized by an encoding device passes through networks to be recorded to the recording medium such as the HDD of a personal computer or a server, or the HDD of an HDD recorder.

Patent Document 1: Japanese Laid-Open Patent Publication No. 2008-99068

### DISCLOSURE OF INVENTION

### PROBLEM TO BE SOLVED BY THE INVENTION

In particular fields (such as law enforcement and at correctional facilities), video data and audio data may be submitted as evidence and thus, authentication of the data is demanded. Nonetheless, even when the digital data of video or audio captured by existing digital cameras is authenticated, a problem arises in that tampering of the data can still occur prior to authentication.

Further, in the case of video and audio captured by an analog camera, the video/audio has to be converted into digital data and the problem of tampering prior to authentication remains.

To solve the problems related to the conventional technology above, an object of the present invention is to provide an electronic signature device and an electronic signature method that can eliminate the potential of tampering from the input of video or audio data until the authentication thereof.

### MEANS FOR SOLVING PROBLEM

To solve the problems above and achieve an object, the electronic signature device and the electronic signature method according to the present invention, upon input of a time series digital data string related to video or audio outside the device into a given processor, execute by the given processor, signature generation processing of generating an electronic signature for the digital data string and outputs the digital data string and the generated electronic signature.

### EFFECT OF THE INVENTION

The present electronic signature device and electronic signature method can eliminate the potential of tampering from an input of video/audio data until the authentication thereof, thereby offering greater admissibility of the video/audio data as evidence.

### BRIEF DESCRIPTION OF DRAWINGS

FIG. 1 is a block diagram depicting an example of a hardware configuration of an electronic signature device connected to an external analog video camera;
FIG. 2 is a block diagram depicting an example of a hardware configuration of the electronic signature device having the analog video camera built-in;
FIG. 3 is a block diagram depicting an example of a hardware configuration of the electronic signature device connected to an external digital video camera;
FIG. 4 is a block diagram depicting an example of a hardware configuration of the electronic signature device having the digital video camera built-in;
FIG. 5 is a block diagram depicting an example of configuration when authentication processing is executed by a DSP 102;
FIG. 6 is a block diagram depicting an example of configuration when authentication processing is executed by a DSP 131;
FIG. 7 is a block diagram for describing processing by the electronic signature device 100 depicted in FIGs. 1 to 4;
FIG. 8 is a diagram depicting an example of a surveillance area;
FIG. 9 is a diagram of another example of a surveillance area;
FIG. 10 is a first diagram depicting a generation method of authentication data;
FIG. 11 is a second diagram depicting a generation method of authentication data;
FIG. 12 is a third diagram depicting a generation method of authentication data;
FIG. 13 is a flowchart depicting detection processing of detecting the start of an event by a detecting unit 702;
FIG. 14 is a flowchart depicting detection processing of detecting the end of an event by the detecting unit 702;
FIG. 15 is a flowchart depicting signal processing by the DSP 102;
FIG. 16 is a first flowchart depicting details of the authentication processing (step S1506) depicted in FIG. 15;
FIG. 17 is a second flowchart depicting details of the authentication processing (step S1506) depicted in FIG. 15;
FIG. 18 is a flowchart depicting details of the authentication processing (step S1705) depicted in FIG. 17; and
FIG. 19 is a flowchart depicting output control processing by an output unit 705 and a control unit 706.

### BEST MODE(S) FOR CARRYING OUT THE INVENTION

Preferred embodiments of an electronic signature device and electronic signature method according to the present invention will be described in detail with reference to the accompanying drawings.

### <Hardware configuration of electronic signature device>

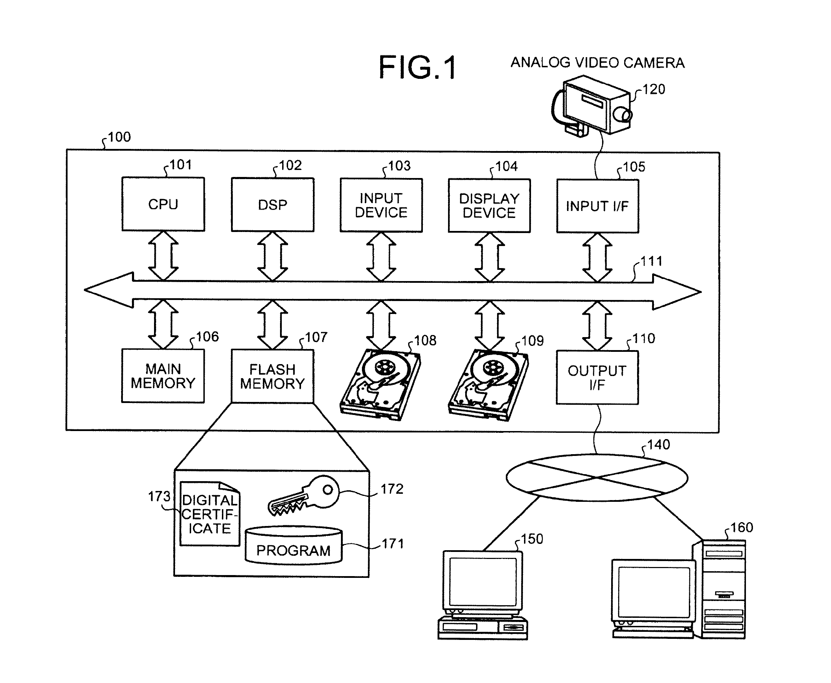

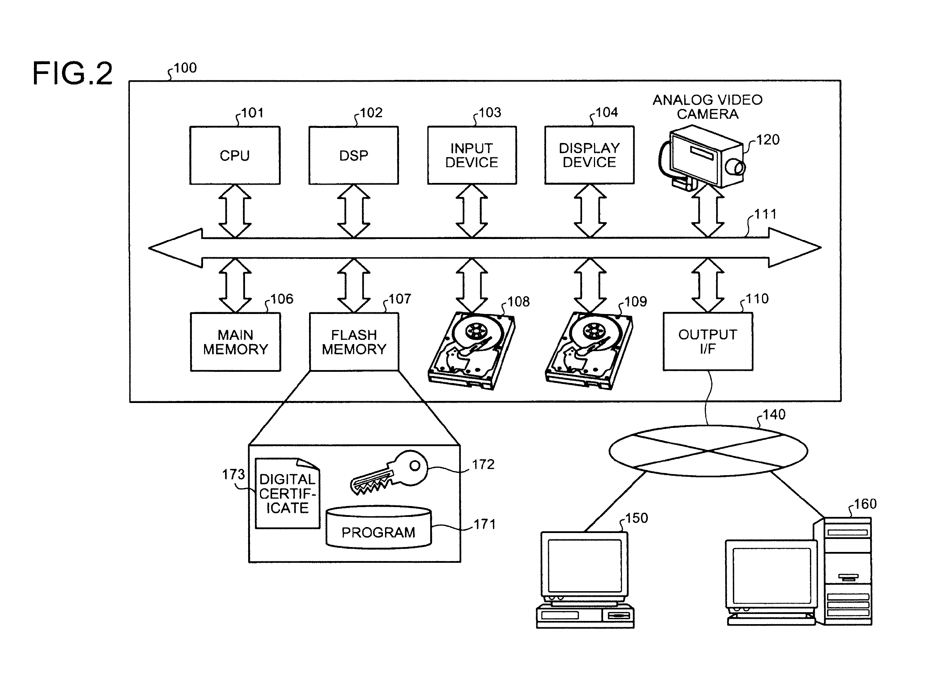

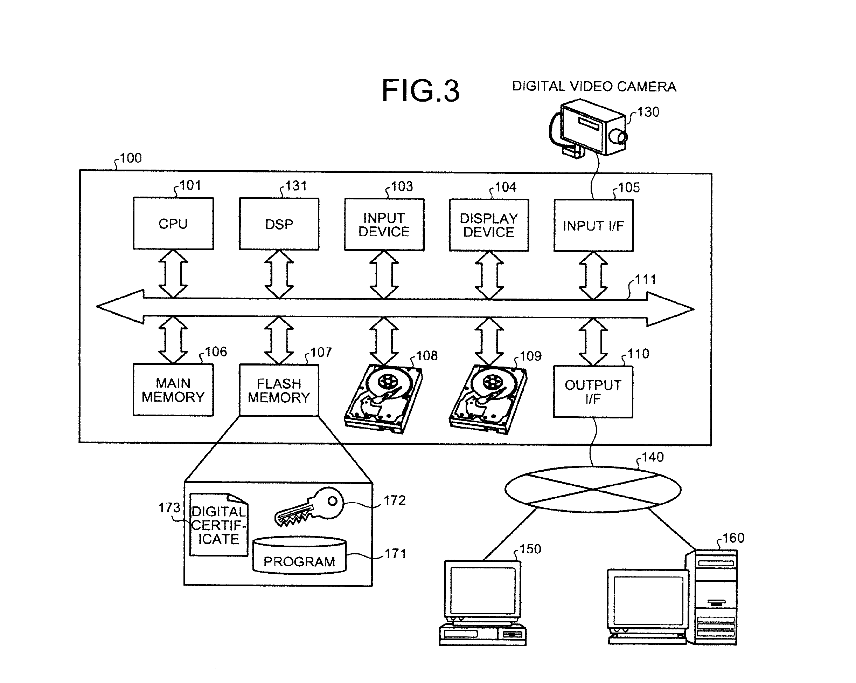

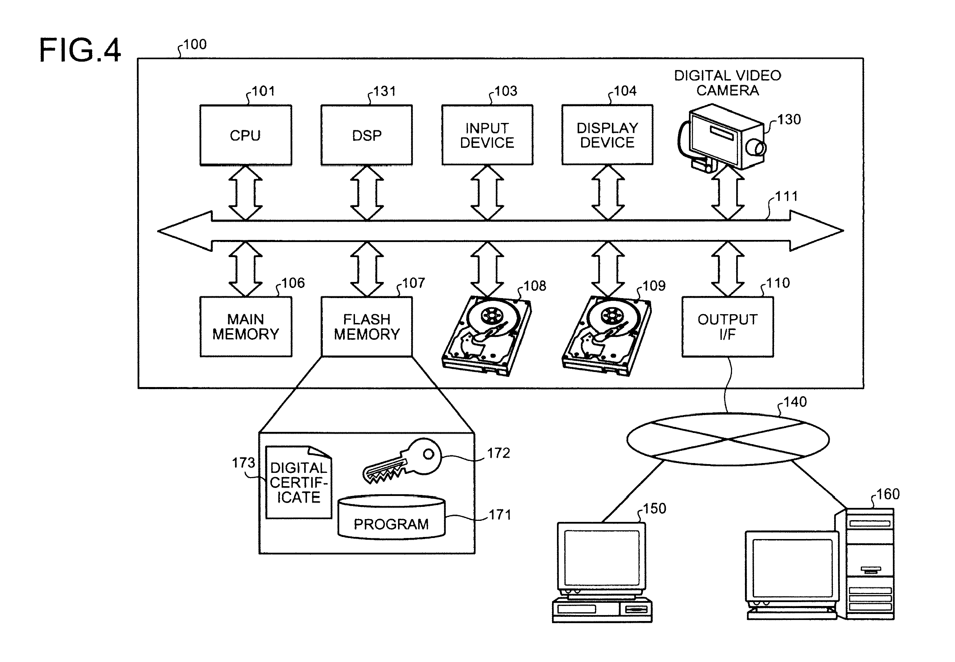

FIGs. 1 to 4 are block diagrams depicting examples of the hardware configuration of the electronic signature device. FIG. 1 depicts an example of the hardware configuration of the electronic signature device connected to an external analog video camera. FIG. 2 depicts an example of the hardware configuration of the electronic signature device equipped with a built-in analog video camera. FIG. 3 depicts an example of the hardware configuration of the electronic signature device connected to an external digital video camera. FIG. 4 depicts an example of the hardware configuration of the electronic signature device equipped with a built-in digital video camera. In FIGs. 1 to 4, a device for recording sound such as a microphone may be used in place of the video cameras. Further, in FIGs. 2 and 4, although an example is depicted where a video camera is built-in to the electronic signature device, typically, the respective components of the electronic signature device are built-in to the video camera.

### (FIG. 1: Example of hardware configuration of electronic signature device with external analog video camera)

An electronic signature device 100 depicted in FIG. 1 includes a central processing unit (CPU) 101, a digital signal processor (DSP) 102, an input device 103, a display device 104, an input interface (I/F) 105, a main memory 106, a flash memory 107, a main HDD 108, a standby HDD 109, and an output I/F 110, respectively connected by a bus 111.

The CPU 101 governs overall control of the electronic signature device 100. For example, the CPU 101 executes processes related to controlling the DSP 102; accessing the main memory 106, the flash memory 107, the main HDD 108 and the standby HDD 109; computations according a program 171; operations specified through the input device 103; displaying on the display device 104; and outputting data to the output I/F 110.

The DSP 102 is a processor that executes given digital signal processing. In the electronic signature device 100 depicted in FIG. 1, the DSP 102 executes conversion processing (encoding) of converting analog data strings related to video or audio from an analog video camera 120 into digital data strings. For example, the DSP 102 converts an analog data string compliant with the National Television Standards Committee (NTSC) scheme into Joint Photographic Experts Group (JPEG) data.

The DSP 102 further executes authentication processing for the digital data strings obtained by the conversion processing. For example, in the authentication processing, the DSP 102 generates digest information of each digital data using a hash function, uses a hash function on a digest information string, which is a time series of the hash values, and encodes the resulting hash values using a private key 172, whereby an electronic signature of a digital data string is obtained. The DSP 102 reads a digital certificate 173 from the flash memory 107. Thus, the digest information, the electronic signature and the digital certificate 173 of each digital data is collectively referred to as "authentication data".

The DSP 102 writes the digital data strings to the main HDD 108, and executes writing processing of writing the digital data strings and the authentication data thereof to the standby HDD 109.

The input device 103 is an input device operated by a user, such as a push-button or switch, a numeric keypad, and a touch panel. The display device 104 is a display such as a liquid crystal display. The input I/F 105 is connected to the analog video camera 120 and outputs to the DSP 102, video or audio related analog data that is from the analog video camera 120.

The main memory 106 is volatile memory used as a work area of the CPU 101. The flash memory 107 is non-volatile memory storing various types of programs 171 such as the operating system (OS) and a boot program, the private key 172, and the digital certificates 173. The main HDD 108 is a recording medium storing the digital data strings resulting from the conversion by the DSP 102. The standby HDD 109 is a recording medium storing the digital data strings resulting from the conversion by the DSP 102 and the authentication data thereof.

In the present embodiment, two HDDs (the main HDD 108 and the standby HDD 109) are disposed. Normally, older data is over written when data is written to the main HDD 108 by the DSP 102. If an event (user input via the input device 103, detection of an abnormality consequent to execution of the program 171, etc.) occurs, the digital data string and the authentication data thereof is written to the standby HDD 109 by the DSP 102. The HDD may be disposed as two physically independent HDDs or a single HDD that is divided and used.

The output I/F 110 transmits the digital data strings and the authentication data thereof, via a network 140 such as a local area network (LAN), a wide area network (WAN), the internet, etc., to a personal computer 150 and a server 160.

The analog video camera 120 is a camera that chemically records to 8 mm film therein or magnetically to magnetic tape therein, analog video or audio data captured by the analog video camera 120. In FIG. 1, analog video camera is provided externally with respect to the electronic signature device 100 and is connected to the electronic signature device 100. Time series analog data strings related to the recorded video or audio are output to the DSP 102, via the input I/F 105.

In the electronic signature device 100 depicted in FIG. 1, the DSP 102 is configured to execute the conversion processing, the authentication processing, and the writing processing as an integrated process flow, i.e., the conversion processing, the authentication processing, and the writing processing are executed within a single processor (the DSP 102) in a closed state and therefore, from the conversion to the digital data string until prior to the authentication thereof, there is no possibility of digital data string tampering occurring.

### (FIG. 2: Example of hardware configuration of electronic signature device 100 with built-in analog video camera 120)

Components identical to those described in FIG. 1 are given the same reference numerals used in FIG. 1 and description thereof is omitted. FIG. 2 depicts a configuration of the electronic signature device 100 with the analog video camera 120 built-in. With this configuration, the input I/F 105 depicted in FIG. 1 becomes unnecessary. Thus, the analog video camera 120 takes in time series analog data strings related to video or sounds that are outside the electronic signature device 100 and provides the time series analog data strings to the DSP 102.

Similar to that above, in the hardware configuration depicted in FIG. 2, in the electronic signature device 100, the DSP 102 executes the conversion processing, the authentication processing, and the writing processing as an integrated process flow, i.e., the conversion processing, the authentication processing, and the writing processing are executed within a single processor (the DSP 102) in a closed state and therefore, from the conversion to the digital data string until prior to the authentication thereof, there is no possibility of digital data string tampering occurring.

### (FIG. 3: Example of hardware configuration of electronic signature device 100 with external digital video camera 130)

In FIG. 3, components identical to those depicted in FIG. 1 are given the same reference numerals used in FIG. 1 and description thereof is omitted. In FIG.2, a digital video camera 130 is connected in place of the analog video camera 120 unlike FIG. 1. The digital video camera 130 is different from the analog video camera 120, and is a camera that converts video and sounds that are outside the digital video camera 130 into digital data, and internally records the video and audio magnetically or electronically. The digital video camera 130 outputs to a DSP 131 via the input I/F 105, a time series digital data string related to the recorded video or audio. As described hereinafter, since the DSP 131 depicted in FIG. 3 differs from the DSP 102 depicted in FIG. 1, a different reference numeral is assigned.

Thus, the digital video camera 130 internally converts video/audio data into digital data and therefore, the DSP 131 in the electronic signature device 100 depicted in FIG. 3 does not need a function for the conversion processing and executes the authentication processing and the writing processing. Consequently, the electronic signature device 100 depicted in FIG. 3 can be configured by simpler functions than the DSP 131.

In the electronic signature device 100 depicted in FIG. 3, the external digital video camera 130 executes the conversion processing; and the DSP 131 executes the authentication processing and the writing processing as an integrated process flow. In other words, provided that communication between the digital video camera 130 and the electronic signature device 100 is secure, there is no possibility of digital data string tampering occurring from the input of the digital data string until prior to the authentication thereof.

### (FIG. 4: Hardware configuration of electronic signature device 100 with built-in digital video camera 130)

In FIG. 4, components identical to those depicted in FIG. 3 are given the same reference numerals used in FIG. 3 and description thereof is omitted. FIG. 4 depicts a configuration of the electronic signature device 100 with the digital video camera 130 built-in. With this configuration, the input I/F 105 depicted in FIG. 3 becomes unnecessary. Thus, the digital video camera 130 takes in time series digital data strings related to video or sounds that are outside the electronic signature device 100 and provides the time series digital data strings to the DSP 131.

In the electronic signature device 100 depicted in FIG. 4, the built-in digital video camera 130 executes the conversion processing; and the DSP 131 executes the authentication processing and the writing processing as an integrated process flow. In other words, provided the communication between the digital video camera 130 and the electronic signature device 100, by the bus 111, is secure, there is no possibility of digital data string tampering occurring from the input of the digital data string until prior to the authentication thereof.

### <Example of configuration of DSP 102, 131>

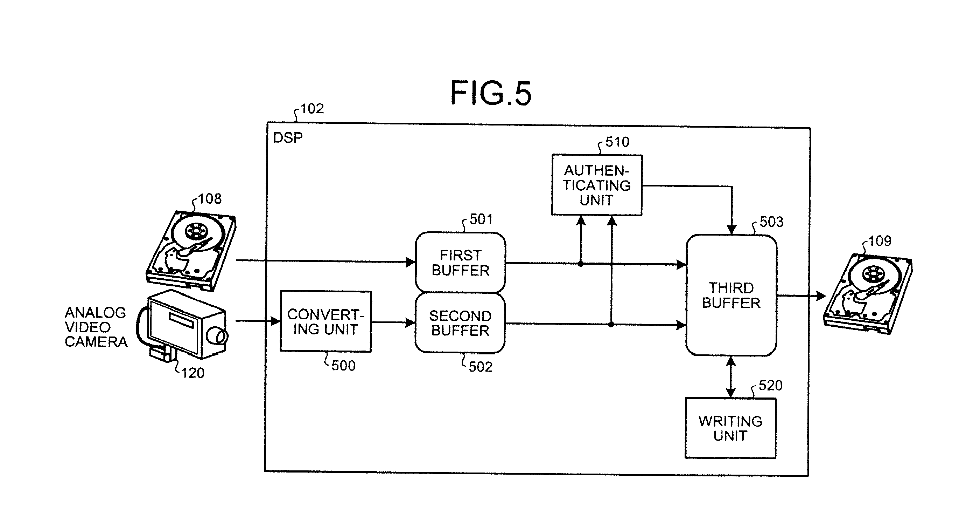

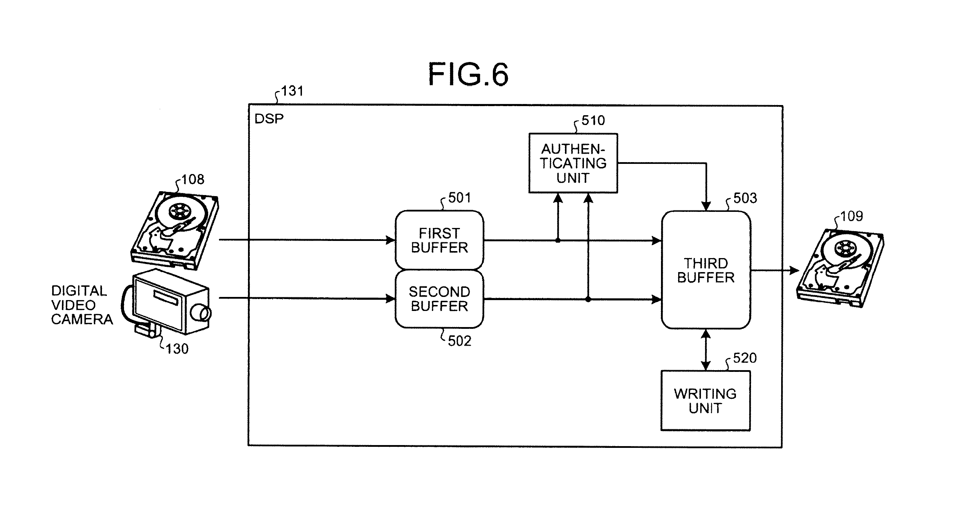

FIGs. 5 and 6 are block diagrams depicting an example of configuration when the authentication processing is executed by the DSPs 102, 131. FIG. 5 depicts a detailed example of a configuration of the DSP 102 that uses an analog video camera and is depicted in FIGs. 1 and 2. FIG. 6 depicts a detailed example of a configuration of the DSP 131 that uses a digital video camera and is depicted in FIGs. 3 and 4.

In FIG. 5, the DSP 102 includes first to third buffers 501-503, a converting unit 500, an authenticating unit 510, and a writing unit 520. The first to the third buffers 501 to 503, for example, can be configured by semiconductor memory. The first buffer 501 is a buffer that temporarily saves digital data read out from the main HDD 108. For example, when an event is detected and digital data that corresponds to a given period before the time of detection is to be authenticated, the digital data string of an interval immediately before in the time series and written in the main HDD 108 can be temporarily saved.

The second buffer 502 is a buffer that temporarily saves digital data strings converted by the converting unit 500. The third buffer 503 is a buffer that temporarily saves the digital data strings saved in the first buffer 501 and the second buffer 502, and the authentication data generated by the authenticating unit 510.

The converting unit 500 converts analog data strings from the analog video camera 120 into digital data strings. The resulting digital data strings are temporarily saved in the second buffer 502. The authenticating unit 510 generates authentication data for the digital data strings temporarily saved in the first buffer 501 and the second buffer 502. In the present embodiment, although authentication data is generated, generation of at least an electronic signature suffices. The generated authentication data is temporarily saved in the third buffer 503.

The writing unit 520 combines and writes to the standby HDD 109, the digital data string and the authentication data thereof stored in the third buffer 503. Thus, in the DSP 102, the conversion processing, the authentication processing, and the writing processing are executed as an integrated process flow, whereby there is no possibility of digital data string tampering occurring from the conversion of the digital data string until prior to the authentication. If the authentication processing is not to be executed, the digital data is written to the main HDD 108, via the second buffer 502 and the third buffer 503, without any authentication data.

In FIG. 6, components identical to those depicted in FIG. 5 are given the same reference numerals used in FIG. 5 and description thereof is omitted. In the DSP 131 depicted in FIG. 6, digital data strings from the digital video camera 130 are directly input to the third buffer 503 and therefore, the converting unit 500 depicted in FIG. 5 is unnecessary. If the authentication processing is not to be executed, the digital data is written to the main HDD 108, via the second buffer 502 and the third buffer 503, without any authentication data.

Thus, in the DSP 131, the authentication processing and the writing processing are executed as an integrated process flow and therefore, provided the communication between the digital video camera 130 and the DSP 131 is secure, there is no possibility of digital data string tampering occurring from the input of the digital data string until prior to the authentication thereof.

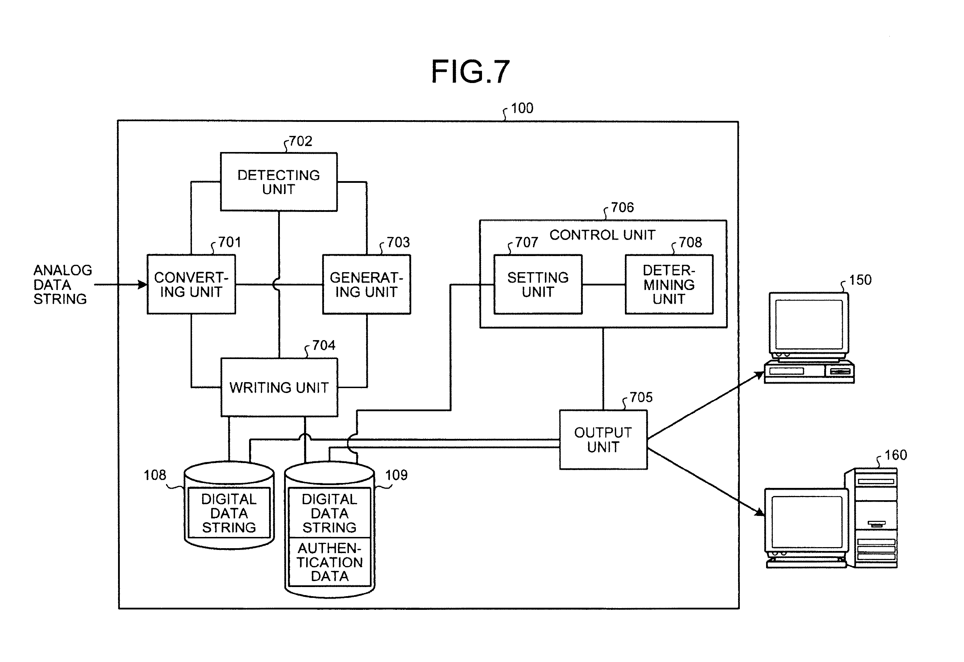

### (FIG. 7: Example of functional configuration of electronic signature device 100)

FIG. 7 is a block diagram for describing processing by the electronic signature device 100 depicted in FIGs. 1 to 4. Components identical to those depicted in FIGs. 1 to 4 are given the same reference numerals used in FIGs. 1 to 4 and description thereof is omitted. In FIG. 7, the electronic signature device 100 includes a converting unit 701, a detecting unit 702, a generating unit 703, a writing unit 704, an output unit 705, and a control unit 706.

The converting unit 701 has a function of converting input analog data strings into digital data strings. For example, NTSC or Phase Alternating Line (PAL) analog data strings are converted into JPEG data. The converting unit 701, for example, in the case of an analog video camera, can be realized as a part of the internal functions of the DSP 102 depicted in FIGs. 1 and 2 (e.g., by the converting unit 500 in FIG. 5); and in the case of a digital video camera, can be realized by a part of the internal functions of the digital video camera 130 depicted in FIGs. 3 and 4. The converted digital data strings are sequentially stored to the main HDD 108 as described above.

The detecting unit 702 has a function of detecting temporal changes in the data volume of the digital data strings converted by the converting unit 701. For example, when the data volume of the digital data is continuously greater than or equal to a threshold for a given period T1, an abnormality is determined to have occurred in the surveillance area and the start of the event is reported to the generating unit 703 and the writing unit 704. Thereafter, if the data volume is detected to be continuously less than the threshold for a given period T2, the abnormality is determined to have returned to normal and the end of the event is reported to the generating unit 703 and the writing unit 704. This detection method is effective when the digital data is audio data and is also effective when the digital data is video data of a restricted area.

In contrast, when the detecting unit 702 detects that the data volume of the digital data converted by the converting unit 701 is continuously less than a threshold for the given period T1, an abnormality is determined to have occurred in the surveillance area and the start of the event is reported to the generating unit 703 and the writing unit 704. Thereafter, if the data volume is continuously greater than or equal to a threshold for the given period T2, the abnormality is determined to have returned to normal and the end of the event is reported to the generating unit 703 and the writing unit 704. This detection method is effective when the digital data is video data of an area targeted for surveillance.

Herein, examples of the two types of detection methods will be described.

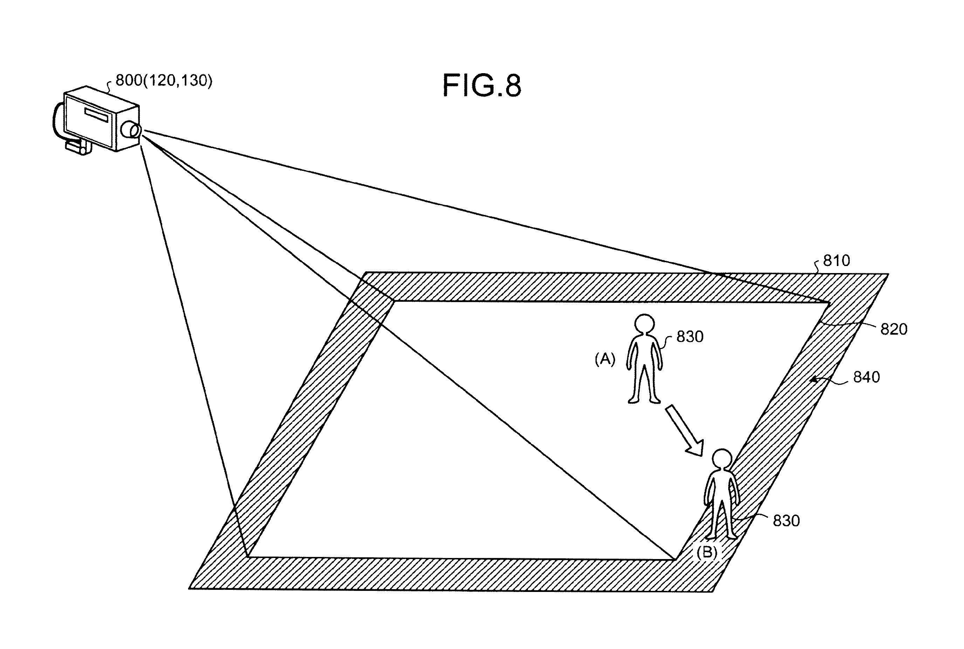

FIG. 8 is a diagram depicting an example of a surveillance area. In FIG. 8, the analog video camera 120 or the digital video camera 130 (hereinafter, simply "video camera 800") is disposed to capture a surveillance subject 830 in a secure area 820 of a surveillance area 810. A hatched area in FIG. 8 is a restricted area 840. For example, when the surveillance subject 830 is at a position (A) within the secure area 820 and shouts, the data volume related to audio increases. If this period of increase continues for the given period T1, the start of the event is reported to the DSP 102.

Further, the surveillance subject 830 is assumed to move from the position (A) within the secure area 820 to a position (B) within the restricted area 840. In this case, since video data of the surveillance subject 830 is no longer among the video data of the secure area 820, the data volume can be thought to decrease. If this state continues for the given period T1, the surveillance subject 830 is determined to have entered the restricted area 840, and the start of the event is reported the DSP 102.

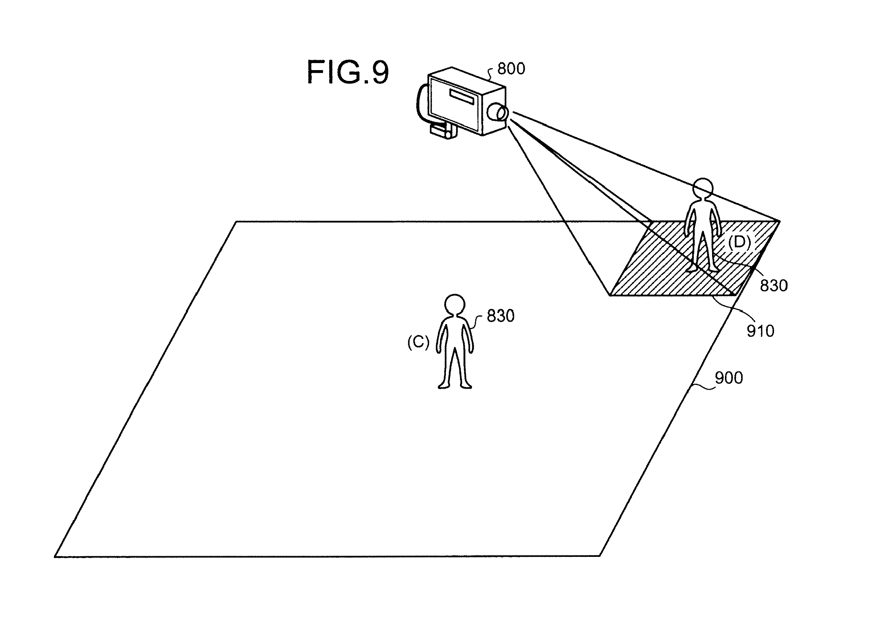

FIG. 9 is a diagram of another example of a surveillance area. In FIG. 9, the video camera 800 is disposed to capture a secure area 910 (indicated by hatching) within a surveillance area 900. The secure area 910 is an area that is off-limits to the surveillance subject 830. For example, if the surveillance subject 830 is at a position (C) within the surveillance area 900 and shouts, the data volume related to audio increases. If this period of increase continues for the given period T1, the start of the event is reported to the DSP 102.

Further, the surveillance subject 830 is assumed to move from the position (C) within the surveillance area 900 to a position (D) in the secure area 910 (restricted area). In this case, since video data of the surveillance subject 830 is no longer among the video data of the secure area 910, the data volume of the video data of the secure area 910 can be thought to increase. If this state continues for the duration of the given period T1, the surveillance subject 830 is determined to have entered the secure area 910 and the start of the event is reported to the DSP 102, 131.

A function of the detecting unit 702 is realized by executing the CPU 101, the program 171 stored in the flash memory 107. Further, a function of the detecting unit 702 may be realized as an internal function of the DSPs 102, 131.

The generating unit 703 has a function of generating authentication data, for each digital data string. In the case of the hardware configurations depicted in FIGs. 1 to 4, the generating unit 703 can be realized as a part (i.e., the authenticating unit 510 depicted in FIGs. 5 and 6) of the internal functions of the DSPs 102, 131. The generating unit 703, upon receiving an event start instruction from the detecting unit 702, obtains a digital data string that is before the given period in time series and written in the main HDD 108 or receives the digital data string from the converting unit 701, and generates authentication data. Herein, an example of a generation method of authentication data will be described.

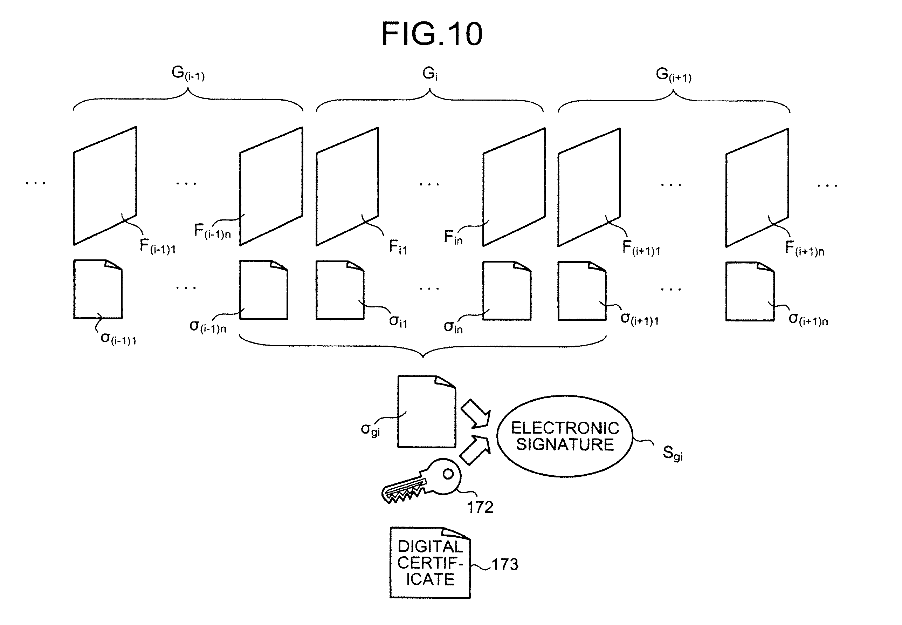

FIGs. 10 to 12 are diagrams depicting a generation method of authentication data. Digital data strings are input in groups and in time series. The digital data strings are input in the order of groups G₍ᵢ₋₁₎, Gi, G₍ᵢ₊₁₎ and in time series. The group G₍ᵢ₋₁₎ is a digital data string of n frames F₍ᵢ₋₁₎₁-F₍ᵢ₋₁₎ₙ arranged in time series. The group Gᵢ is a digital data string of n frames Fᵢₗ-Fᵢₙ arranged in time series. The group G₍ᵢ₊₁₎ is a digital data string of n frames F₍ᵢ₊₁₎₁-F₍ᵢ₊₁₎ₙ arranged in time series.

At the generating unit 703, each time a frame is input, digest information for the frame is generated by a hash function. In the example depicted in FIG. 10, digest information σ₍ᵢ₋₁₎₁-σ₍ᵢ₊₁₎ₙ is generated for each frame F₍ᵢ₋₁₎₁-F₍ᵢ₊₁₎ₙ in each of the groups G₍ᵢ₋₁₎, Gᵢ, G₍ᵢ₊₁₎.

Description will be given with respect to the group Gᵢ. The digest information σ₍ᵢ₋ᵢ₎ₙ of a particular frame in the preceding group (group G₍ᵢ₋ᵢ₎), e.g., the tail frame F₍ᵢ₋₁₎ₙ, the digest information σᵢ₁-σᵢₙ, and the digest information σ₍ᵢ₊₁₎₁ of a particular frame, i.e., the head frame F₍ᵢ₋₁₎₁, in the subsequent group (group G₍ᵢ₊₁₎), are concatenated in time series and substituted into a hash function, thereby generating digest information σgᵢ for the group Gᵢ. The generated digest information σgᵢ is encoded using the private key 172, thereby generating an electronic signature Sgᵢ for the group Gᵢ. Finally, the digital certificate 173 is extracted. Thus, authentication data is generated.

When a signature is verified, the presence of digest information identical to the digest information σ_{gi} indicates that the digest information σ₍ᵢ₋₁₎ₙ for the tail frame of the preceding group G₍ᵢ₋₁₎ F₍ᵢ₋₁₎ₙ and the digest information σ₍ᵢ₊₁₎₁ for the head frame F₍ᵢ₊₁₎₁ of the subsequent group G₍ᵢ₊₁₎ was used to generate the identical digest information. Therefore, the verification group, which is the generation source of the identical digest information, is indicated to be identical to the group Gᵢ positioned as the subsequent group of the group G₍ᵢ₋₁₎ and the preceding group of the group G₍ᵢ₊₁₎. Consequently, the group Gᵢ and the continuity of the time series of the groups G₍ᵢ₋₁₎, Gᵢ, G₍ᵢ₊₁₎ can be authenticated, indicating that tampering has not occurred.

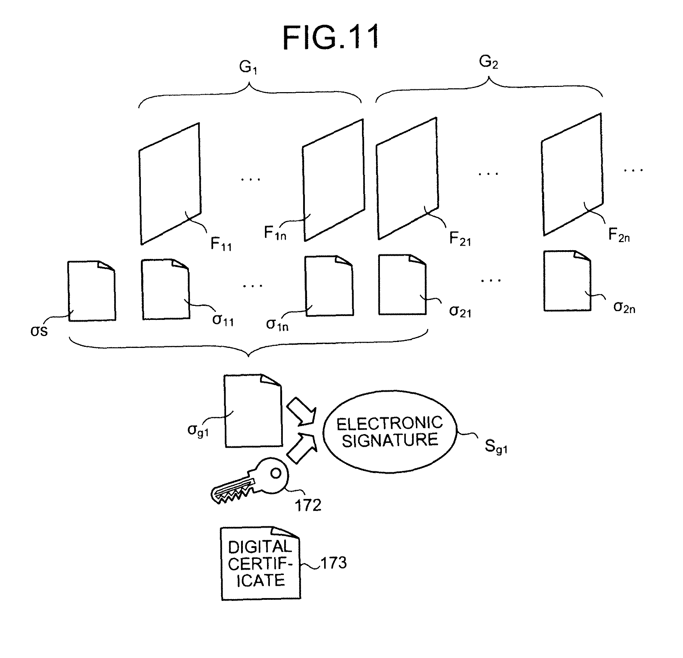

FIG. 11 depicts a generation method of authentication data when the group Gᵢ is a head group G₁ (i=1). In FIG. 11, although a subsequent group (group G₂) of the head group G₁ is present, unlike the example depicted in FIG. 10, a preceding group (group G₍ᵢ₋₁₎) is not present. In other words, since digest information σ₍ᵢ₋₁₎ₙ for the tail frame F₍ᵢ₋₁₎ₙ of a preceding group (group G₍ᵢ₋₁₎) does not exist, identification information σs that identifies the group G₁ to be the head group is instead added.

Thus, for the group G₁, the identification information σs, the digest information σ₁₁-σ₁ₙ for frames F₁₁-F₁ₙ, and that for a particular frame in the subsequent group G₂, e.g., the digest information σ₂₁ of the head frame F₂₁, are concatenated in time series and substituted into a hash function, whereby the digest information σ_{g1} for the group G₁ is generated. The generated digest information σ_{g1} is encoded using the private key 172, whereby an electronic signature S_{g1} for the group G₁ is generated. The digital certificate 173 is also extracted. Thus, authentication data is generated.

When a signature is verified, the presence of digest information identical to the digest information σ_{g1} indicates that the identification information σs and the digest information σ₂₁ of the head frame F₂₁ of the subsequent group G₂ was used to generate the identical digest information. Therefore, the verification group, which is the generation source of the identical digest information, is indicated to be identical to the head group G₁. Consequently, the group G₁ and the continuity of the time series of the groups G₁, G₂ can be authenticated, indicating that tampering has not occurred.

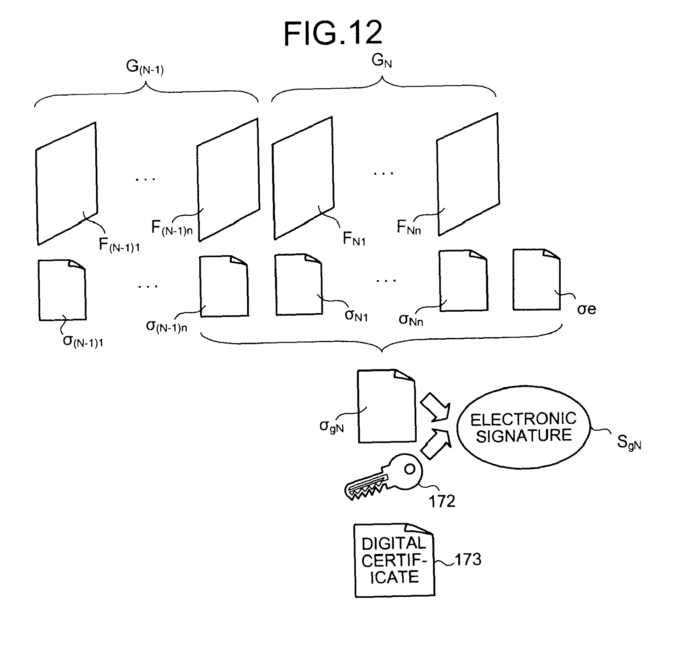

FIG. 12 depicts a generation method of authentication data when the group Gᵢ is a tail group G_{N} (i=N). In FIG. 12, although a preceding group (group G_{(N-1)}) of the tail group G_{N} is present, unlike the example depicted in FIG. 10, a subsequent group (group G_{(N+1)}) is not present. In other words, since digest information σ_{(N+1)1} for the head frame F_{(N+i)1} of a subsequent group (group G_{(N+1)}) does not exist, identification information σe that identifies the group G_{N} to be the tail group is added.

Thus, for the group G_{N}, the digest information for a particular frame in the preceding group G_{(N-1)}, e.g., the digest information σ_{(N-1)n} for the tail frame F_{(N-1)n}, the digest information σ_{N1}-σ_{Nn} for frames F_{N1} -F_{Nn}, and the identification information σe are concatenated in time series and substituted into a hash function, whereby the digest information σ_{gN} for the group G_{N} is generated. The generated digest information σ_{gN} is encoded using the private key 172, whereby an electronic signature S_{gN} for the group G_{N} is generated. The digital certificate 173 is also extracted. Thus, authentication data is generated.

When a signature is verified, the presence of digest information identical to the digest information σ_{gN} indicates that the digest information σ_{(N-1)N} of the tail frame F_{(N-1)N} of the preceding group G_{(N-1)} and the identification information σe was used to generate the identical digest information. Therefore, the verification group, which is the generation source of the identical digest information, is indicated to be identical to the tail group G_{N}. Consequently, the group G_{N} and the continuity of the time series of the groups G_{(N-1)}, G_{N} can be authenticated, indicating that tampering has not occurred.

The reference of description returns to FIG. 7. The writing unit 704 has a function of writing data to a storage device. In the case of the hardware configurations depicted in FIGs. 1 to 4, the writing unit 704 can be realized by a part of the internal functions of the DSPs 102, 131 (e.g., by the writing unit 520 in FIGs. 5 and 6). For example, digital data strings are written to the main HDD 108 until the start of an event is detected by the detecting unit 702, and from the detection of the start of an event until detection of the end of the event by the detecting unit 702, digital data strings and the authentication data thereof are written to the standby HDD 109.

Further, as described with reference to FIGs. 5 and 6, when the detecting unit 702 detects the start of an event, the generating unit 703 reads from the main HDD 108, the digital data string that corresponds to a given interval before the time of detection, and performs authentication. The writing unit 704 writes to the standby HDD 109, the digital data string and the authentication data thereof.

The output unit 705 has a function of outputting digital data strings and the authentication data thereof. In the case of the hardware configurations depicted in FIGs. 1 to 4, the output unit 705 can be realized as the output I/F 110. The output unit 705 transmits the digital data strings, etc. to preliminarily set destinations (the personal computer 150, the server 160, etc.).

The control unit 706 has a function of controlling the output unit 705 to prohibit the output of digital data strings that have not been authenticated. For example, a function of the control unit 706 is realized by executing on the CPU 101, the program 171 stored in the flash memory 107. The control unit 706 has a setting unit 707 and a determining unit 708. The setting unit 707 sets the digital data string to be output. For example, configuration may be such that the digital data strings written in the standby HDD 109 are sequentially set for output. Configuration may be such that a particular digital data string is set for output according to an operation received by the input device 103.

The determining unit 708 determines whether authentication data has been generated for a digital data string set by the setting unit 707. For example, the determining unit 708 determines whether a digital data string that is to be output is paired with authentication data thereof and stored in the standby HDD 109. If authentication data is not stored, the digital data string is not authenticated, i.e., a digital data string having no electronic signature has been set for output.

Therefore, the output of such a digital data string is prohibited by the control unit 706. For example, access to digital data strings that are to be output is prohibited, the digital data strings are deleted, etc. Further, even if digital data strings that are to be output are written to the output I/F 110, the digital data strings are cleared from the buffer in the output I/F 110.

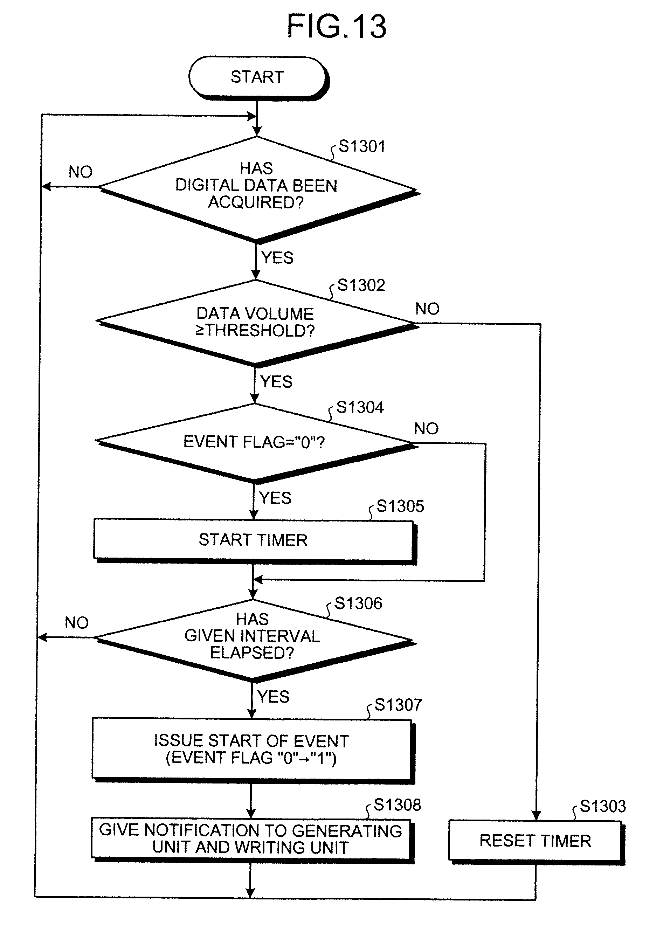

With reference to FIGs. 13 to 19, various types of processing flows of the electronic signature device 100 will be described.

### <Flow of event detection processing>

FIG. 13 is a flowchart depicting detection processing of detecting the start of an event by the detecting unit 702. In FIG. 13, an example will be described where the start of an event is detected when the data volume becomes greater than or equal to a threshold.

The detecting unit 702 waits until digital data is acquired from an external device or is obtained by conversion (step S1301: NO). When digital data has been acquired (step S1301: YES), the detecting unit 702 determines whether the data volume of the acquired digital data is at least a threshold (step S1302). If the data volume is less than the threshold (step S1302: NO), the detecting unit 702 resets a timer (step S1303), and returns to step S1301.

On the other hand, if the data volume is greater than or equal to the threshold (step S1302: YES), the detecting unit 702 determines whether an event flag is "0" (step S1304). An event flag of "0" indicates a normal state in the surveillance area.

If event flag is "0" (step S1304: YES), the detecting unit 702 starts the timer (step S1305), and transitions to step S1306. On the other hand, if the event flag is not "0" (step S1304: NO), since the timer has already been started, the detecting unit 702 transitions to step S1306.

At step S1306, the detecting unit 702 determines whether a given interval has elapsed (step S1306). If the timer has not been started at step S1305 or if the given interval has not elapsed since the start of the timer (step S1306: NO), the detecting unit 702 returns to step S1301.

If the given interval has elapsed since the start of the timer at step S1305 (step S1306: YES), the detecting unit 702 issues a start of an event and changes the event flag from "0" to "1" (step S1307), and reports the start of the event to the generating unit 703 and the writing unit 704 (step S1308). Subsequently, the detecting unit 702 returns to step S1301.

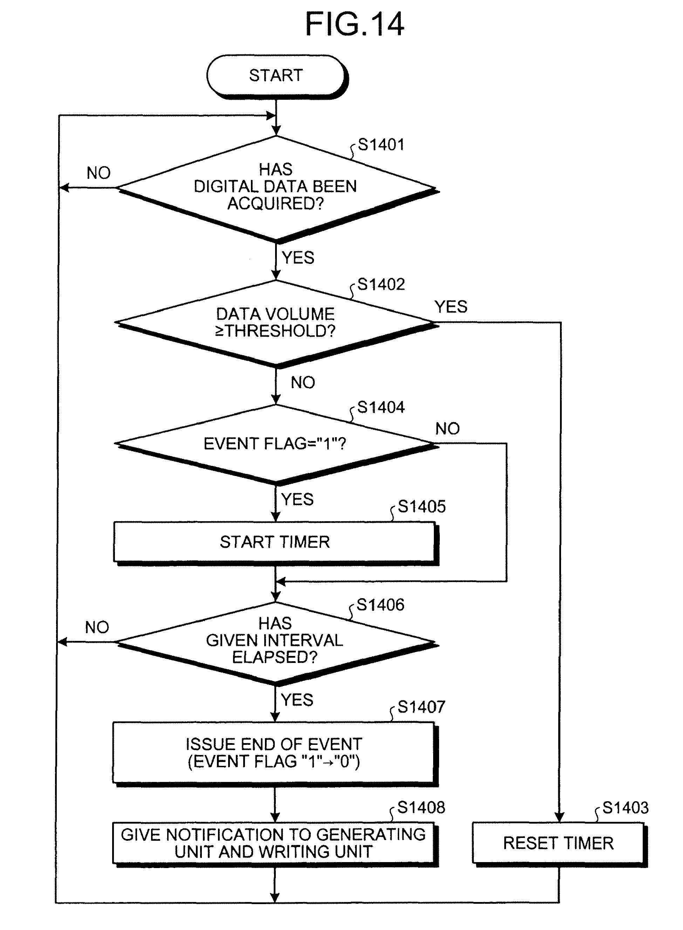

FIG. 14 is a flowchart depicting detection processing of detecting the end of an event by the detecting unit 702. In FIG. 14, an example will be described where the end of an event is detected when the data volume becomes less than a threshold.

The detecting unit 702 waits until digital data is acquired from an external device or is obtained by conversion (step S1401: NO). When digital data has been acquired (step S1401: YES), the detecting unit 702 determines whether the data volume of the acquired digital data at least a threshold (step S1402). If the data volume is greater than or equal to the threshold (step S1402: YES), the detecting unit 702 resets a timer (step S1403), and returns to step S1401.

On the other hand, if the data volume is less than the threshold (step S1402: NO), the detecting unit 702 determines whether an event flag is "1" (step S1404). An event flag of "1" indicates an abnormal state in the surveillance area, i.e., indicates that a start of the event has been issued.

If the event flag is "1" (step S1404: YES), the detecting unit 702 starts the timer (step S1405), and transitions to step S1406. On the other hand, if the event flag is not "1" (step S1404: NO), since the timer has already been started, the detecting unit 702 transitions to step S1406.

At step S1406, the detecting unit 702 determines whether a given interval has elapsed (step S1406). If the timer has not been started at step S1405 or if the given interval has not elapsed since the start of the timer (step S1406: NO), the detecting unit 702 returns to step S1401.

If the given interval has elapsed since the start of the timer at step S1405 (step S1406: YES), the detecting unit 702 issues an end of the event and changes the event flag from "1" to "0" (step S1407), and reports the end of the event to the generating unit 703 and the writing unit 704 (step S1408). Subsequently, the detecting unit 702 returns to step S1401.

By thus detecting an abnormal state, the digital data string obtained during the interval from the start of the event until the end of the event can be authenticated. In other words, for other intervals, authentication is not necessary and therefore, power savings can be facilitated. In the event detection processing depicted in FIGs. 13 and 14, although the respective given intervals are timed, rather than timing, configuration may be such that the number of acquired digital data are counted (e.g., a count of image frames such as those depicted in FIGs. 10 to 12). Thus, when the count is greater than or equal to a given count, a given interval can be determined to have elapsed.

### <Signal processing by DSP 102>

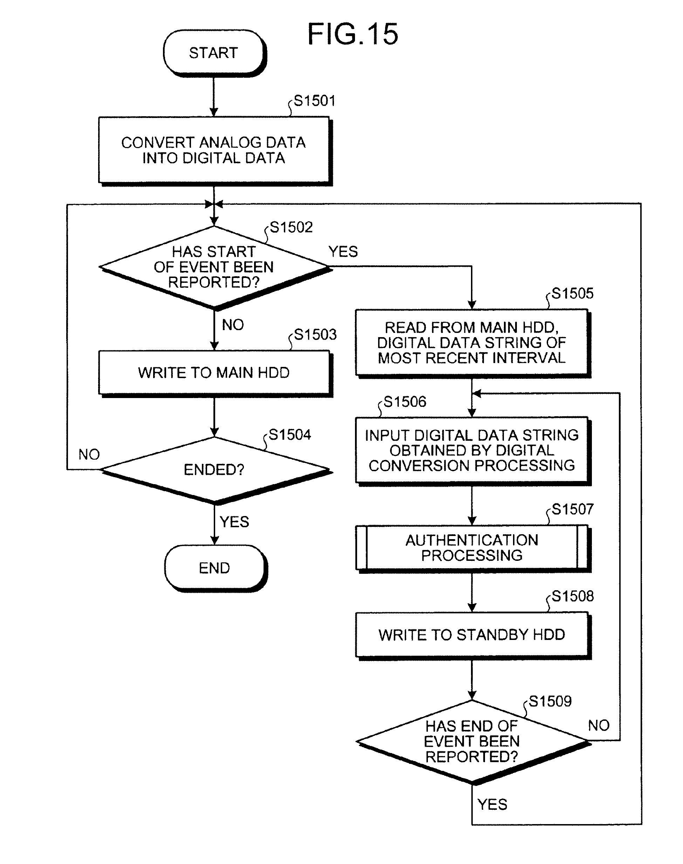

FIG. 15 is a flowchart depicting signal processing by the DSP 102. In FIG. 15, signal processing of the DSP 102 in the electronic signature device 100 of the hardware configurations depicted in FIG. 1 and 2 will be described.

The DSP 102 converts analog data into digital data (step S1501) and determines whether the start of an event has been reported by the detecting unit 702 (step S1502). If notification of the start of an event has not been received (step S1502: NO), the DSP 102 writes the digital data to the main HDD 108 (step S1503), and determines whether the signal processing by the DSP 102 has ended (step S1504). If the signal processing has ended (step S1504: YES), the processing according to the flowchart ends. If the signal processing has not ended (step S1504: NO), the DSP 102 returns to step S1501.

At step S1502, if notification of the start of an event has been received (step S1502: YES), the DSP 102 reads from the main HDD 108, the digital data string of the most recent interval in time series (step S1505), and performs input of the digital data string obtained by the digital conversion processing (step S1506). For example, as depicted in FIG. 5, since the digital data is written in the second buffer 502, the DSP 102 writes the digital data to the third buffer 503 from the second buffer 502. During this writing, the DSP 102 executes the authentication processing (step S1507). The DSP 102 writes the authenticated digital data string and the authentication data thereof to the third buffer 503. Thereafter, the DSP 102 writes to the standby HDD 109, the digital data string and the authentication data thereof written to the third buffer 503 (step S1508).

Subsequently, the DSP 102 determines whether the end of the event has been reported by the detecting unit 702 (step S1509). If notification of the end of the event has not been received (step S1509: NO), the DSP 102 returns to step S1506. On the other hand, if notification of the end of the event has been received (step S1509: YES), the DSP 102 transitions to step S1501.

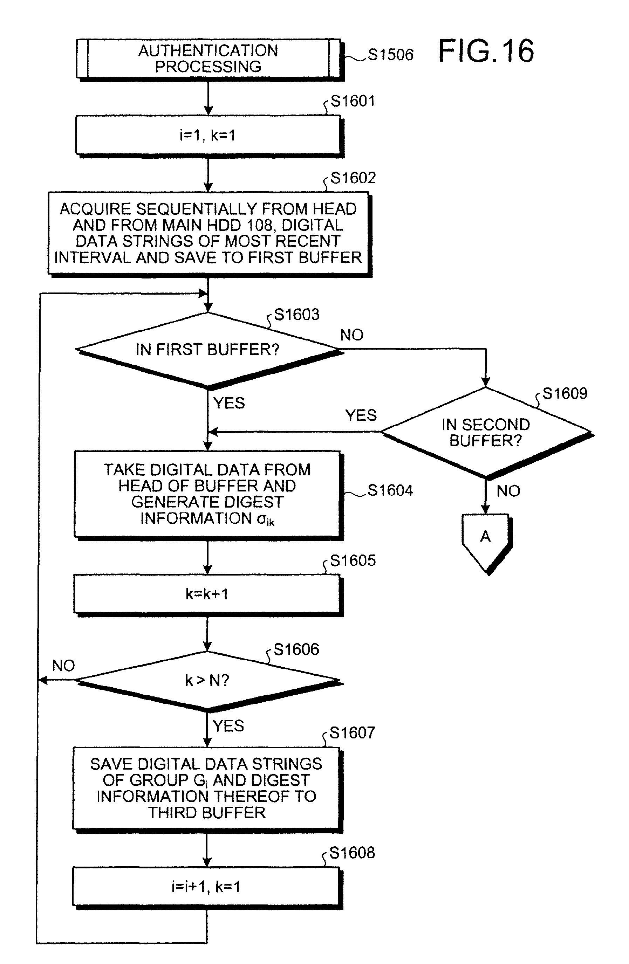

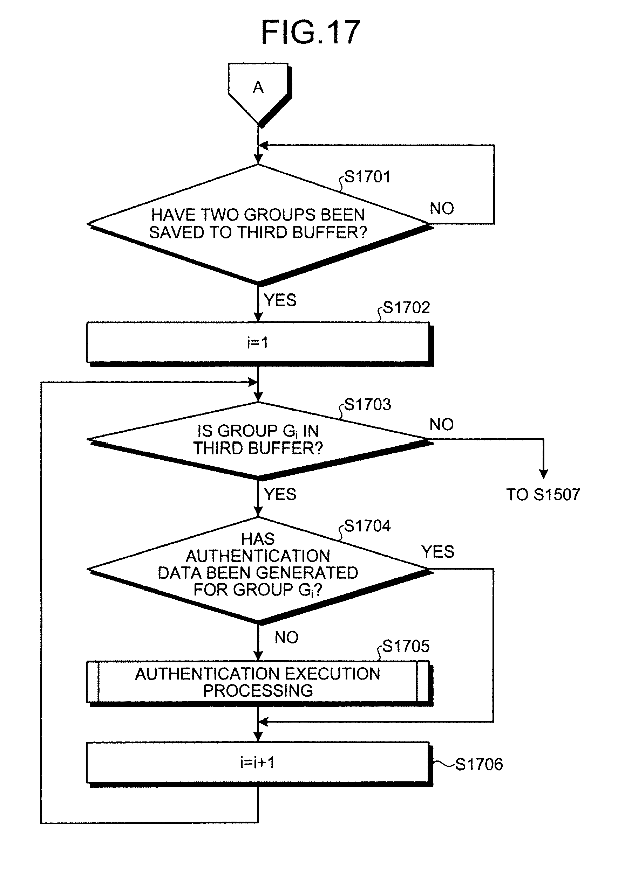

FIGs. 16 and 17 are flowcharts depicting details of the authentication processing (step S1507) depicted in FIG. 15. Here, an example will be described when the authentication processing is performed by the DSPs 102, 131 depicted in FIG. 5 or 6. The DSP 102, 131 sets the group number i as i=1, and sets a counter k as k=1 (step S1601). The DSP 102, 131 sequentially acquires from the head, the digital data strings of the most recent interval in time series read from the main HDD 108, and saves the read digital data strings to the first buffer 501 (step S1602).

The DSP 102, 131 determines whether digital data is in the first buffer 501. If digital data is in the first buffer 501 (step S1603: YES), the DSP 102, 131 takes the digital data from the head of the first buffer 501 and generates digest information σᵢₖ (step S1604). The DSP 102, 131 increments k (step S1605), and determines whether k>N is true (step S1606). N is the total number of digital data (image frames) in one group.

If k>N is not true (step S1606: NO), the DSP 102, 131 returns to step S1603. If k>N is true (step S1606: YES), the DSP 102, 131 saves the digital data strings of the group Gi and the digest information thereof to the third buffer 503 (step S1607), and increments i and sets k=1 (step S1608). Thereafter, the DSP 102, 131 returns to step S1603.

At step S1603, if no digital data is in the first buffer 501 (step S1603: NO), the DSP 102, 131 determines whether digital data is in the second buffer 502 (step S1609). In other words, digital data in the first buffer 501 is preferentially processed. If digital data is in the second buffer 502 (step S1609: YES), the DSP 102, 131 transitions to step S1604. On the other hand, if digital data is not in the second buffer 502 (step S1609: NO), the DSP 102, 131 transitions to step S1701 depicted in FIG. 17.

At step S1701 in FIG. 17, the DSP 102, 131 waits until the digital data strings of two groups are saved to the third buffer 503 (step S1701: NO). When the digital data strings of two groups have been saved (step S1701: YES), the DSP 102, 131 sets i=1 (step S1702), and determines whether the group Gᵢ is in the third buffer 503 (step S1703). When the group Gᵢ is in the third buffer 503 (step S1703: YES), the DSP 102, 131 determines whether authentication data has been generated for the group Gᵢ (step S1704).

If authentication data has not been generated (step S1704: NO), the DSP 102, 131 performs authentication execution processing (step S1705), and transitions to step S1706. On the other hand, if authentication data has been generated (step S1704: YES), the DSP 102, 131 transitions to step S1706. At step S1706, the DSP 102, 131 increments i and transitions to step S1703. At step S1703, if the group Gᵢ is not in the third buffer 503 (step S1703: NO), the DSP 102, 131 transitions to step S1507.

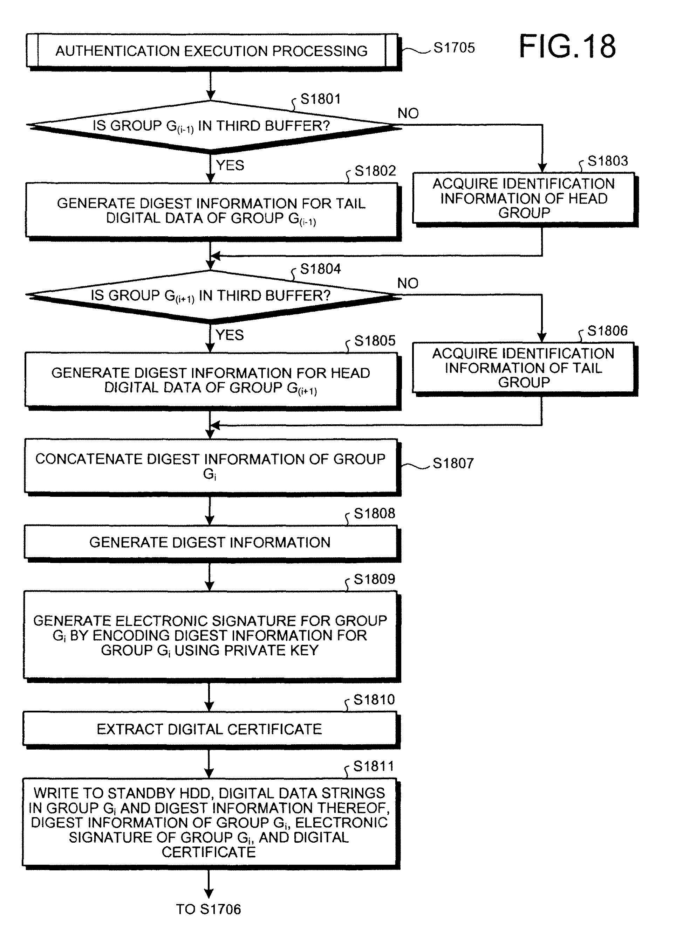

FIG. 18 is a flowchart depicting details of the authentication processing (step S1705) depicted in FIG. 17. The DSP 102, 131 determines whether the group G₍ᵢ₋₁₎ is in the third buffer 503 (step S1801). If the group G₍ᵢ₋₁₎ is in the third buffer 503 (step S1801: YES), the DSP 102, 131 generates digest information σ_{(i-1)N} for the tail digital data of the group G₍ᵢ₋₁₎ (step S1802), and transitions to step S1804.

On the other hand, if the group G₍ᵢ₋₁₎ is not in the third buffer 503 (step S1801: NO), the DSP 102, 131 acquires the identification information σs of the group G₁ since the group Gᵢ is the head group G₁ (step S1803), and transitions to step S1804.

The DSP 102, 131 determines whether the group G₍ᵢ₊₁₎ is in the third buffer 503 (step S1804). If the group G₍ᵢ₊₁₎ is in the third buffer 503 (step S1804: YES), the DSP 102, 131 generates digest information σ₍ᵢ₊₁₎₁ for the head digital data of the group G₍ᵢ₊₁₎ (step S1805), and transitions to step S1807.

If the group G₍ᵢ₊₁₎ is not in the third buffer 503 (step S1804: NO), the DSP 102, 131 acquires the identification information σe of the group G_{N} since the group Gᵢ is the tail group G_{N} (step S1806), and transitions to step S1807.

At step S1807, the DSP 102, 131 concatenates the digest information and digest information in the group Gᵢ obtained at steps S1802 to S1806 (step S1807), and generates digest information σ_{gi} for the group Gᵢ (step S1808). The DSP 102, 131 encodes the generated digest information using the private key 172 and thereby generates an electronic signature S_{gi} for the group Gᵢ (step S1809). Thereafter, the DSP 102, 131 extracts the digital certificate 173 (step S1810).

The DSP 102, 131 writes to the standby HDD 109, digital data strings Fᵢₗ-Fᵢₙ in the group Gᵢ and the digest information σᵢ₁-σᵢₙ thereof, the digest information σ_{gi} of the group Gᵢ, the electronic signature S_{gi} of the group Gᵢ, and the digital certificate 173 (step S1811), and transitions to step S1706.

### <Flow of output control processing>

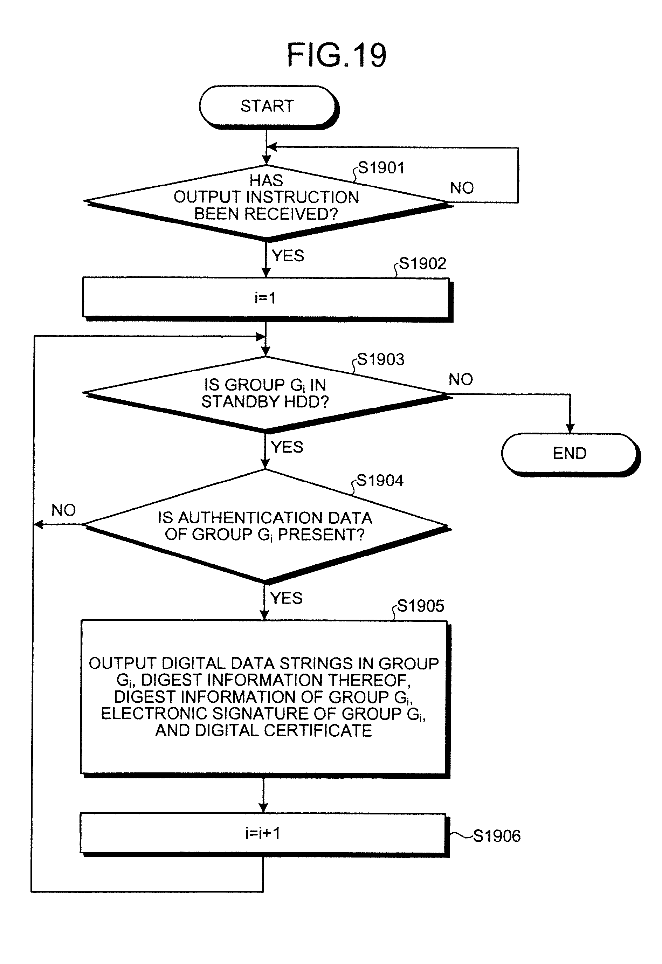

FIG. 19 is a flowchart depicting output control processing by the output unit 705 and the control unit 706. The control unit 706 waits for an output instruction (step S1901: NO), and when an output instruction has been received (step S1901: YES), sets i=1 (step S1902), and determines whether the group Gᵢ is in the standby HDD 109 (step S1903). If the group Gᵢ is in the standby HDD 109 (step S1903: YES), the control unit 706 determines whether authentication data of the group Gᵢ is present (step S1904).

If authentication data is not present (step S1904: NO), the control unit 706 returns to step S1903. If authentication data is present (step S1904: YES), the control unit 706 outputs from the output I/F 110, the digital data strings Fᵢₗ-Fᵢₙ in the group Gᵢ, the digest information σ₁ₙ-oᵢₙ thereof, the digest information σ_{gi} of the group Gᵢ, the electronic signature S_{gi} of the group Gᵢ, and the digital certificate 173 (step S1905). The control unit 706 increments i (step S1906), and returns to step S1903.

In FIGs. 15 to 17, although processing has been described where analog data strings are input to the DSP 102, when digital data strings are input, the processing becomes that of the electronic signature device 100 with the DSP 131 built-in and therefore, the conversion processing is omitted.

As described, for the electronic signature device 100 depicted in FIG. 1 and having the analog video camera 120 provided independently, the DSP 102 executes the conversion processing, the authentication processing, and the writing processing as an integrated process flow. In other words, the conversion processing, the authentication processing, and the writing processing are executed within a single processor (the DSP 102) in a closed state and therefore, from the conversion to the digital data string until prior to the authentication thereof, there is no possibility of digital data string tampering occurring.

For the electronic signature device 100 depicted in FIG. 2 and having the analog video camera 120 built-in, the DSP 102 executes the conversion processing, the authentication processing, and the writing processing as an integrated process flow. In other words, the conversion processing, the authentication processing, and the writing processing are executed within a single processor (the DSP 102) in a closed state and therefore, from the conversion to the digital data string until prior to the authentication thereof, there is no possibility of digital data string tampering occurring.

For the electronic signature device 100 depicted in FIG. 3 and having the digital video camera 130 provided independently, the digital video camera 130 executes the conversion processing, and the DSP 131 executes the authentication processing and the writing processing as an integrated process flow. In other words, provided that communication between the digital video camera 130 and the electronic signature device 100 is secure, there is no possibility of digital data string tampering occurring from the input of the digital data string until prior to the authentication thereof.

For the electronic signature device 100 depicted in FIG. 4 and having the digital video camera 130 built-in, the digital video camera 130 executes the conversion processing, and the DSP 131 executes the authentication processing and the writing processing as an integrated process flow. In other words, provided that communication between the digital video camera 130 and the electronic signature device 100 is secure, there is no possibility of digital data string tampering occurring from the input of the digital data string until prior to the authentication thereof.

By controlling whether authentication data is to be generated, based on changes in a monitored data volume, when an abnormal state occurs the relevant digital data string can be authenticated. Therefore, since authentication need not be performed for normal states, power savings can be facilitated.

In particular, when authentication data is to be generated, by additionally generating authentication data for a digital data string that is before the notification of the start of an event, video or audio before and after an abnormal state can be authenticated.

Further, when an electronic signature is to be generated for a given group, by using the digest information in the preceding group and the digest information in the subsequent group, the given group and the continuity of the time series can be authenticated. In particular, for the head group and the tail group, by using respectively unique identification information, continuity can be guaranteed.

Even if a problem occurs at the DSP 102 or if the DSP 102 is tampered with, the output of digital data strings having no authentication data is prohibited by the CPU 101, which is different from the DSP 102. Thus, leaks of unauthenticated digital data strings can be prevented. In other words, the electronic signature device 100 is of a hardware configuration that leaves no room for tampering of digital data strings. Therefore, only authenticated digital data strings are output from the electronic signature device 100, enabling the digital strings to be assured in terms of authenticity and admissible as evidence.

As described, the electronic signature device 100 and electronic signature method according to the embodiments, eliminate the potential of tampering from an input of video/audio data until the authentication thereof and enable greater admissibility of the video/audio data as evidence. Although an HDD has been given as an example of the storage device in the electronic signature device 100, configuration is not limited hereto and non-volatile memory, an optical disk, etc. may be used. Further, the HDD (non-volatile memory, optical disk) may be built-in or externally provided.

### EXPLANATIONS OF LETTERS OR NUMERALS

- 100: electronic signature device
- 102: DSP
- 120: analog video camera
- 130: digital video camera
- 131: DSP
- 172: private key
- 173: digital certificate
- 500: converting unit
- 510: authenticating unit
- 520: writing unit
- 701: converting unit
- 702: detecting unit
- 703: generating unit
- 704: writing unit
- 705: output unit
- 706: control unit
- 707: setting unit
- 708: determining unit

In one embodidment, there is provided an electronic signature device comprising: a generating unit that when a time series digital data string related to video or sound outside the device is input to a given processor, executes inside the given processor, signature generation processing of generating an electronic signature for the digital data string; and an output unit that outputs the digital data string and the generated electronic signature.

In one embodiment, there is provided an electronic signature device comprising: a generating unit that when a time series digital data string that is related to video or sound outside the device and that is obtained by a capturing of the video or the sound by the device is input to a given processor, executes inside the given processor, signature generation processing of generating an electronic signature for the digital data string; and an output unit that outputs the digital data string and the generated electronic signature.

In one embodiment, there is provided an electronic signature device comprising: a generating unit that when a time series analog data string related to video or sound outside the device is input to a given processor, executes inside the given processor, conversion processing of converting the analog data string into a digital data string and signature generation processing of generating an electronic signature for the digital data string obtained by the conversion processing; and an output unit that outputs the digital data string and the generated electronic signature.

In one embodiment, there is provided an electronic signature device comprising: a generating unit that when a time series analog data string that is related to video or sound outside the device and that is obtained by a capturing of the video or the sound by the device is input to a given processor, executes inside the given processor, conversion processing of converting the analog data string into a digital data string and signature generation processing of generating an electronic signature for the digital data string obtained by the conversion processing; and an output unit that outputs the digital data string and the generated electronic signature.

In one embodiment, the electronic signature device further comprises: a detecting unit that detects temporal changes in a data volume of the digital data string, wherein the generating unit executes the signature generation processing inside the given processor, based on a detection result obtained by the detecting unit.

In one embodiment, the electronic signature device further comprises a writing unit that executes inside the given processor, first writing processing of writing to a first storage device, first digital data strings that are obtained until detection by the detecting unit and among a plurality of the digital data strings, and second writing processing of writing to a second storage device, a second digital data string obtained after the detection by the detecting unit and among the data strings, wherein the generating unit executes inside the given processor, the signature generation processing of generating the electronic signature for the second digital data string written to the second storage device.

In one embodiment, the generating unit executes inside the given processor, the signature generation processing of generating the electronic signature for the second digital data string and a digital data string that has temporal continuity with the second digital data string and is among the first digital data strings.

In one embodiment, the generating unit executes the signature generation processing inside the given processor, based on digest information of each digital data in the digital data string, digest information of a given digital data selected from a preceding digital data string temporally preceding the digital data string, and digest information of a given digital data selected from a subsequent digital data string temporally subsequent to the digital data string.

In one embodiment, the generating unit, when the preceding digital data string does not exist and in place of the digest information of a given digital data selected from the preceding digital data string, executes the signature generation processing inside the given processor, using identification information that indicates a head.

In one embodiment, the generating unit, when the subsequent digital data string does not exist and in place of the digest information of a given digital data selected from the subsequent digital data string, executes the signature generation processing inside the given processor, using identification information that indicates a tail.

In one embodiment, the electronic signature device further comprises a controller that controls the output unit and prohibits output of a digital data string for which the electronic signature has not been generated.

In one embodiment, there is provided an electronic signature method executed by an electronic signature device, the method comprising: executing inside a given processor and when a time series digital data string related to video or sound outside the device is input to the given processor, signature generation processing of generating an electronic signature for the digital data string; and outputting the digital data string and the generated electronic signature.

In one embodiment, there is provided an electronic signature method executed by an electronic signature device, the method comprising: executing inside a given processor and when a time series digital data string that is related to video or sound outside the device and that is obtained by a capturing of the video or the sound by the device is input to the given processor, signature generation processing of generating an electronic signature for the digital data string; and outputting the digital data string and the generated electronic signature.

In one embodiment, there is provided an electronic signature method executed by an electronic signature device, the method comprising: executing inside a given processor and when a time series analog data string related to video or sound outside the device is input to the given processor, conversion processing of converting the analog data string into a digital data string and signature generation processing of generating an electronic signature for the digital data string obtained by the conversion processing; and outputting the digital data string and the generated electronic signature.

In one embodiment, there is provided an electronic signature method executed by an electronic signature device, the method comprising: executing inside a given processor and when a time series analog data string that is related to video or sound outside the device and that is obtained by a capturing of the video or the sound by the device is input to the given processor, conversion processing of converting the analog data string into a digital data string and signature generation processing of generating an electronic signature for the digital data string obtained by the conversion processing; and outputting the digital data string and the generated electronic signature.

## Claims

1. An electronic signature device (100), comprising:
a processor (102, 131, 702, 703, 704) configured to:
detect temporal changes in a data volume of a time series digital data string related to video or sound outside the device, and
internally execute, based on a result of detection of the temporal changes, a signature generation process of generating an electronic signature for the digital data string; and
an output unit (110, 705) configured to output the digital data string and the generated electronic signature.

2. The electronic signature device (100) according to claim 1,
wherein the processor (102, 131, 703) is configured to:
internally execute, when the digital data string is input to the processor, a first writing process of writing first digital data strings to a first storage device and a second writing processing of writing a second digital data string to a second storage device, wherein the first digital data strings constitute the digital data string and are obtained until detection of a temporal change, and wherein the second digital data string constitutes the digital data string and is obtained after the detection, and
internally execute the signature generation process for: a first digital data string that is among the first digital data strings written to the first storage device and that has temporal continuity with the second digital data string, and the second digital data string written to the second storage device.

3. The electronic signature device (100) according to claim 1,
wherein the processor (102, 131, 703) is configured to:
internally execute, when the digital data string obtained by a capturing of the video or the sound by the device is input to the processor, a first writing process of writing first digital data strings to a first storage device and a second writing process of writing a second digital data string to a second storage device, wherein the first digital data strings constitute the digital data string and are obtained until detection of a temporal change, and wherein the second digital data string constitutes the digital data string and is obtained after the detection, and
internally execute the signature generation for: a first digital data string that is among the first digital data strings written to the first storage device and that has temporal continuity with the second digital data string, and the second digital data string written to the second storage device.

4. The electronic signature device (100) according to claim 1,
further comprising an input interface configured to receive an input of a time series analog data string related to the video or the sound outside the device,
wherein the processor (102, 131, 703) includes a first memory unit and a second memory unit and is configured to internally execute, when the analog data string is input to the processor through the input interface:
a conversion process of converting the analog data string into the digital data string,
a writing process of writing the digital data string obtained by the conversion process to the first memory unit,
a detection process of detecting the temporal changes in the data volume of the digital data string written to the first memory,
the signature generation process of generating the electronic signature for the digital data string written to the first memory unit, and
a writing process of writing the generated electronic signature to the second memory unit;
wherein the output unit (110, 705) is configured to output the digital data string written to the first memory unit and the electronic signature written to the second memory unit.

5. The electronic signature device (100) according to claim 1,
further comprising an input interface configured to receive an input of a time series analog data string related to the video or the sound outside the device,
wherein the processor (102, 131, 703) includes a first memory unit and a second memory unit and is configured to internally execute, when the analog data string is obtained by a capturing of the video or the sound by the device is input to the processor through the input interface:
a conversion process of converting the analog data string into the digital data string,
a writing process of writing the digital data string obtained by the conversion processing to the first memory unit,
a detection process of detecting the temporal changes in the data volume of the digital data string written to the first memory unit,
the signature generation process of generating the electronic signature for the digital data string written to the first memory unit, and
a writing process of writing the generated electronic signature to the second memory unit,
wherein the output unit (110, 705) is configured to output the digital data string written to the first memory unit and the electronic signature written to the second memory unit.

6. The electronic signature device (100) according to claim 4 or 5,
wherein the processor (102, 131, 704) is configured to:
internally execute a first writing process of writing first digital data strings to a first storage device and a second writing process of writing a second digital data string to a second storage device, wherein the first digital data strings constitute the digital data string and are obtained until detection of a temporal change, and wherein the second digital data string constitutes the digital data string and is obtained after the detection, and
internally execute the signature generation process for: a first digital data string that is among the first digital data strings written to the first storage device and that has temporal continuity with the second digital data string, and the second digital data string written to the second storage device.

7. An electronic signature method executed by an electronic signature device (100), the electronic signature method comprising:
detecting, by a processor (102, 131, 702, 703, 704), temporal changes in a data volume of a time series digital data string related to video or sound outside the device;
internally executing, by the processor (102, 131, 702, 703, 704), based on a result of the detecting of the temporal changes, a signature generation process of generating an electronic signature for the digital data string; and
outputting, by an output unit (110, 705), the digital data string and the generated electronic signature.

8. The electronic signature method according to claim 7,
wherein the processor:
internally executes, when the digital data string is input to the processor, a first writing process of writing first digital data strings to a first storage device and a second writing processing of writing a second digital data string to a second storage device, wherein the first digital data strings constitute the digital data string and are obtained until detection of a temporal change, and wherein the second digital data string constitutes the digital data string and is obtained after the detection, and
internally executes the signature generation process for: a first digital data string that is among the first digital data strings written to the first storage device and that has temporal continuity with the second digital data string, and the second digital data string written to the second storage device.

9. The electronic signature method according to claim 7, wherein the processor:
internally executes, when the digital data string obtained by a capturing of the video or the sound by the device is input to the processor, a first writing process of writing first digital data strings to a first storage device and a second writing process of writing a second digital data string to a second storage device, wherein the first digital data strings constitute the digital data string and are obtained until detection of a temporal change, and wherein the second digital data string constitutes the digital data string and is obtained after the detection, and
internally executes the signature generation for: a first digital data string that is among the first digital data strings written to the first storage device and that has temporal continuity with the second digital data string, and the second digital data string written to the second storage device.

10. The electronic signature method according to claim 7,
further comprising receiving, by an input interface, an input of a time series analog data string related to the video or the sound outside the device,
wherein the processor (102, 131, 703) includes a first memory unit and a second memory unit and internally executes, when the analog data string is input to the processor through the input interface:
a conversion process of converting the analog data string into the digital data string
a writing process of writing the digital data string obtained by the conversion process to the first memory unit,
a detection process of detecting the temporal changes in the data volume of the digital data string written to the first memory,
the signature generation process of generating the electronic signature for the digital data string written to the first memory unit,
a writing process of writing the generated electronic signature to the second memory unit;
wherein the output unit (110, 705) outputs the digital data string written to the first memory unit and the electronic signature written to the second memory unit.

11. The electronic signature method according to claim 7,
further comprising receiving an input of a time series analog data string related to the video or the sound outside the device,
wherein the processor (102, 131, 703) internally executes, when the analog data string is obtained by a capturing of the video or the sound by the device is input to the processor through the input interface:
a conversion process of converting the analog data string into the digital data string,
a writing process of writing the digital data string obtained by the conversion processing to the first memory unit,
a detection process of detecting the temporal changes in the data volume of the digital data string written to the first memory unit,
the signature generation process of generating the electronic signature for the digital data string written to the first memory unit, and
a writing process of writing the generated electronic signature to the second memory unit,
wherein the output unit (110, 705 outputs the digital data string written to the first memory unit and the electronic signature written to the second memory unit.
